# EUROPÄISCHE PATENTSCHRIFT

(11) **EP 3 298 307 B1**
(45) Veröffentlichungstag und Bekanntmachung des Hinweises auf die Patenterteilung: **13.02.2019**
(21) Anmeldenummer: 16724589.3
(22) Anmeldetag: 06.05.2016
(51) Int. Cl.: F16H 61/4035, F16H 61/4096, F16H 61/4008, F16H 61/4026

(54) **HYDROSTATISCHER ANTRIEB**
HYDROSTATIC DRIVE
ENTRAÎNEMENT HYDROSTATIQUE

(30) Priorität: 16.05.2015 DE 102015006321
(43) Veröffentlichungstag der Anmeldung: 28.03.2018
(73) Patentinhaber: HYDAC Systems & Services GmbH, 66280 Sulzbach (DE)
(72) Erfinder: HINSBERGER, Kenny, 66287 Quierschied (DE)
(74) Vertreter: Bartels und Partner, Patentanwälte
(86) Internationale Anmeldenummer: PCT/EP2016/000743
(87) Internationale Veröffentlichungsnummer: WO 2016/184546

(56) Entgegenhaltungen:
- DE-A1- 10 000 110
- DE-A1-102007 012 121
- DE-A1-102010 012 975
- US-A1- 2011 314 801

## Beschreibung

Die Erfindung betrifft einen hydrostatischen Antrieb mit den Merkmalen im Oberbegriff von Anspruch 1.
Antriebe dieser Art (DE 10 2009 058 005 A1) sind bekannt und werden häufig als Fahrantrieb bei Nutzfahrzeugen verwendet. Bei einem derartigen Einsatz ist eine der Verdrängereinheiten üblicherweise direkt von einer Verbrennungskraftmaschine angetrieben, und die andere, abtriebsseitige Verdrängereinheit ist mit der betreffenden Fahrmechanik gekoppelt.

Die gattungsgemäße DE 10 2007 012 121 A1 beschreibt einen hydrostatischen Antrieb als Gesamtsystem mit zwei fluidischen, zumindest vom Volumenstrom her einstellbaren Verdrängereinheiten, von denen eine mit einem Antrieb und die andere mit einem Abtrieb gekoppelt ist und die in der Art eines geschlossenen fluidischen Kreislaufs sowohl auf ihrer jeweiligen Eingangs- als auch Ausgangsseite über je eine Arbeitsleitung miteinander verbunden sind, wobei an dem geschlossenen fluidischen Kreislauf ein Speicherkreislauf angeschlossen ist, der mindestens eine Speichereinrichtung aufweist und der sich in eine Niederdruck- und eine Hochdruckseite unterteilt, und mit einer Ventilsteuereinrichtung zum Ansteuern des Gesamtsystems.
Auch die DE 10 2010 012 975 A1, die DE 100 00 110 A1 und die US 2011/314801 A1 offenbaren hydrostatische Antriebe.

Ausgehend von dem diesbezüglichen Stand der Technik liegt der Erfindung die Aufgabe zugrunde, einen hydrostatischen Antrieb zur Verfügung zu stellen, der sich durch ein besonders günstiges und energieeffizientes Betriebsverhalten auszeichnet.

Gemäß dem Kennzeichen des Anspruchs 1 weist die Ventilsteuereinrichtung zwei Ventileinrichtungen mit Rückschlagfunktion auf, von denen jeweils eine zwischen die beiden Arbeitsleitungen und den niederdruckseitigen Speicherkreislauf geschaltet ist. Durch die Rückschlagfunktion dieser Ventileinrichtungen kann sich das den Mindestdruck führende Druckmedium, auch während sich der Fahrantrieb im Betrieb befindet, im Gesamtsystem verteilen und sorgt dadurch für ein annähernd konstantes Niederdruckniveau im Gesamtsystem.

Bei dem hydrostatischen Antrieb ist ein Speicherkreislauf vorhanden, an den ein die Verdrängereinheiten verbindender fluidischer Kreislauf angeschlossen ist, wobei der Speicherkreislauf mindestens eine Speichereinrichtung aufweist und sich der Speicherkreislauf in eine Niederdruck- und eine Hochdruckseite unterteilt, und wobei eine Ventilsteuereinrichtung zum Ansteuern des Gesamtsystems vorgesehen ist. Über die reine Antriebsfunktion hinaus lassen sich mit einem derartigen Systemaufbau nicht nur eine Bremsenergierückgewinnung, sondern weitere Sonderfunktionen realisieren, wie ein Überdrehzahlschutz während der Bremsenergierückgewinnung im Schubbetrieb oder ein hydraulisches Boosten der Antriebsleistung.

Das System ist derart ausgelegt, dass unter Bildung des geschlossenen fluidischen Kreislaufs die beiden Verdrängereinheiten sowohl auf ihrer jeweiligen Eingangs- als auch Ausgangsseite mit je einer Arbeitsleitung miteinander verbunden sind, wobei die Ventilsteuereinrichtung im Wesentlichen zwischen die beiden Arbeitsleitungen geschaltet ist.

Die Ventilsteuereinrichtung kann hierbei zwei erste Ventileinrichtungen aufweisen, die in ihrer geöffneten Stellung die beiden Verdrängereinheiten über die jeweilige Arbeitsleitung miteinander verbinden und die in ihrer Sperrstellung zumindest die Hochdruckseite von der Niederdruckseite des Gesamtsystems entkoppeln, wobei die abtriebsseitige Verdrängereinheit der Niederdruckseite und die antriebsseitige Verdrängereinheit der Hochdruckseite des Gesamtsystems zugeordnet sind.

In besonders vorteilhafter Weise kann zwischen die beiden Arbeitsleitungen und den hochdruckseitigen Speicherkreislauf je eine weitere dritte Ventileinrichtung mit Proportionalfunktion geschaltet sein. Dies eröffnet die Möglichkeit der proportionalen Einstellung eines gewünschten Arbeitsdrucks in der jeweiligen Arbeitsleitung, dient aber auch als Sperrventil zum Speicher-Laden im Stillstand und für Start-Stopp-Funktion.

Bei besonders vorteilhaften Ausführungsbeispielen ist an den Niederdruck-Speicherkreislauf zwischen den zweiten Ventileinrichtungen und der abtriebsseitigen Verdrängereinheit eine Permanentfluidvolumenversorgung angeschlossen. Eine derartige Konstantdruckversorgung stellt sicher, dass die Niederdruckseite auf dem systemeigenen Vorspanndruckniveau gehalten wird. Auch wird das Gesamtsystem über diese Versorgungsleitung befüllt, und es werden gegebenenfalls auftretende Volumenverluste ausgeglichen, beispielsweise wenn bei Druckspitzen Fluid über ein Druckbegrenzungsventil zum Tank abströmt oder Verluste durch Leckage auftreten.

Mit besonderem Vorteil kann die Anordnung hierbei so getroffen sein, dass die Permanentfluidvolumenversorgung an eine Einspeiseleitung an deren Eingang angeschlossen ist, die ausgangsseitig in einen Tank ausmündet, wobei die Einspeiseleitung an dem Niederdruck-Speicherkreislauf permanent über eine Verbindungsstelle angeschlossen ist und wobei zwischen die Verbindungsstelle und den Eingang in die Einspeiseleitung ein Rückschlagventil und zwischen der Verbindungsstelle und dem Ausgang in diese Einspeiseleitung ein Druckbegrenzungsventil geschaltet sind.

In vorteilhafter Weise können ferner zwischen die beiden Arbeitsleitungen, im Leitungsabschnitt zwischen den beiden ersten Ventileinrichtungen sowie den beiden dritten Ventileinrichtungen und parallel zu den letzteren verlaufend, zwei weitere vierte Ventileinrichtungen mit Proportional-Druckbegrenzungsfunktion geschaltet sein.

Dabei kann mit Vorteil zwischen den Paaren von dritten und vierten Ventileinrichtungen mit ihren zuordenbaren Verbindungsleitungen eine weitere Verbindungsleitung verlaufen, in die ein weiteres Rückschlagventil geschaltet ist.

In besonders vorteilhafter Weise kann die Speichereinrichtung des Speicherkreislaufs im Wesentlichen aus einem Doppelkolbenspeicher bestehen, dessen in einem Speichergehäuse längsverfahrbar geführter Doppelkolben einen ersten Arbeitsraum mit einem Vorspanndruck von einem zweiten Arbeitsraum auf der Hochdruckseite sowie von einem dritten Arbeitsraum auf der Niederdruckseite und einem vierten Arbeitsraum mit dem Atmosphärendruck voneinander separiert. Bei dem Einsatz für Fahrantriebe bei mobilen Einheiten mit üblicherweise begrenztem Einbauraum für das Hydrauliksystem stellt die erfindungsgemäße Bauweise mit einem Doppelkolbenspeicher, der die Funktion zweier Hydrospeicher ausübt und dementsprechend eine besonders kompakte Bauweise des Systems ermöglicht, einen besonders bedeutenden Vorteil dar. Auch ergibt sich dergestalt eine Niederdruckseite mit zusätzlichem Kompensationsspeicher.

Die jeweilige Verdrängereinheit kann in vorteilhafter Weise aus einem 4-Quadranten-System mit einstellbarem Schwenkwinkel bestehen, das sowohl als Hydromotor als auch als Hydropumpe betreibbar ist.

Nachstehend ist die Erfindung anhand eines in der Zeichnung dargestellten Ausführungsbeispiels im Einzelnen erläutert. Es zeigen:
- Fig. 1: in Systemdarstellung das Gesamtsystem eines als Fahrantrieb ausgelegten Ausführungsbeispiels des erfindungsgemäßen Antriebs;
- Fig. 2: in Symboldarstellung die Schaltung des Ausführungsbeispiels, wobei für den Betriebszustand "Speicher-Laden" im Stillstand hochdruckseitige Fluidwege mit ausgezogenen Linien und niederdruckseitige Fluidwege mit gestrichelten Linien eingezeichnet und die Strömungsverläufe mit Strömungspfeilen angedeutet sind;
- Fig. 3: eine der Fig. 2 entsprechende Darstellung, wobei der Betriebszustand "Speicher-Laden" im Fahrbetrieb dargestellt ist;
- Fig. 4: eine entsprechende Darstellung, wobei der Betriebszustand "Bremsenergie-Rückgewinnung/Überdrehzahlschutz" dargestellt ist;
- Fig. 5: eine entsprechende Darstellung, wobei der Betriebszustand "Verbrennungskraftmaschine-Starten" dargestellt ist; und
- Fig. 6: eine entsprechende Darstellung, wobei der Betriebszustand "Boosten" dargestellt ist.

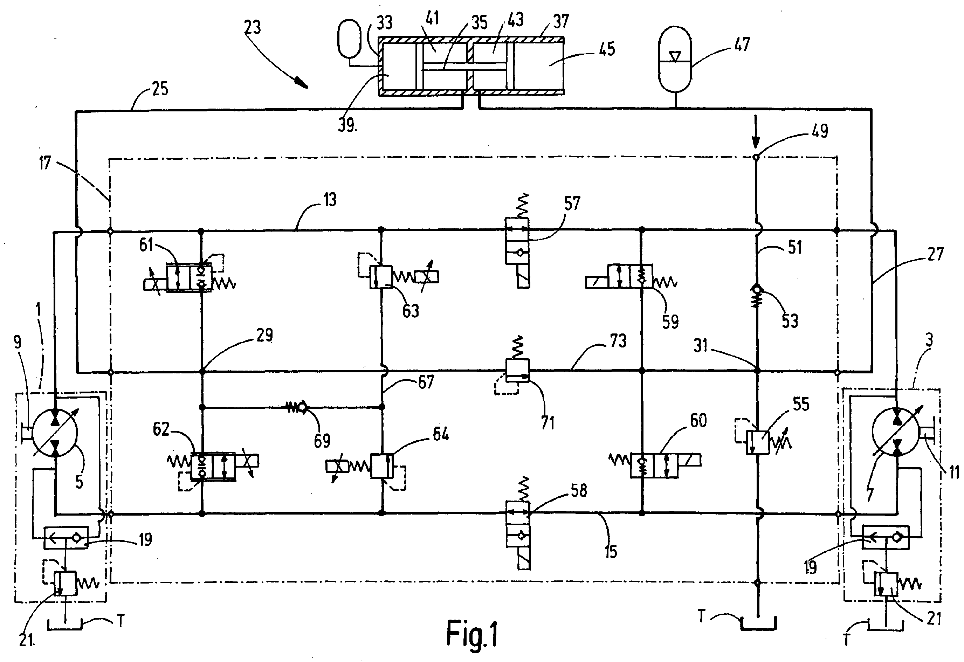

Es wird zunächst auf Fig. 1 Bezug genommen, in der eine antriebsseitige Verdrängereinheit mit 1 und eine abtriebsseitige Verdrängereinheit mit 3 bezeichnet sind. Jede Verdrängereinheit 1 und 3 weist eine Motor-Pumpeneinheit 5 bzw. 7 in Form eines 4-Quadranten-Systems mit einstellbarem, durchschwenkbarem Schwenkwinkel auf. Bei der antriebsseitigen Verdrängereinheit 1 ist die Motor-Pumpeneinheit 5 über eine Antriebswelle 9 mit einer nicht dargestellten Verbrennungskraftmaschine oder einem Elektromotor gekoppelt. Bei der abtriebsseitigen Verdrängereinheit 3 ist die Motor-Pumpeneinheit 7 über eine Abtriebswelle 11 mit der Fahrmechanik (Getriebe) eines nicht dargestellten Fahrzeuges gekoppelt. Ein Anschluss der Verdrängereinheiten 1 und 3 ist mit einer ersten Arbeitsleitung 13 verbunden, und der jeweils andere Anschluss der Verdrängereinheiten 1, 3 ist mit einer zweiten Arbeitsleitung 15 verbunden. Diesen Arbeitsleitungen 13 und 15 ist eine als Ganzes mit 17 bezeichnete Ventilsteuereinrichtung zugeordnet. Bei jeder Verdrängereinheit 1 und 3 sind die beiden Anschlüsse der Motor-Pumpeneinheiten 5 und 7 jeweils mit einem der Eingänge eines Wechselventils 19 verbunden, dessen Ausgang über ein Druckbegrenzungsventil 21 mit dem Tank T in Verbindung ist. Dadurch sind der das jeweils höhere Druckniveau führende Anschluss der Motor-Pumpeneinheiten 5 und 7 und damit die angeschlossenen Arbeitsleitungen 13 und 15 über das jeweilige Druckbegrenzungsventil 21 zur Tankseite hin gegen Systemüberdruck abgesichert.

Der Ventilsteuereinrichtung 17 ist ein Speicherkreislauf 23 zugeordnet, der eine Hochdruckseite 25 und eine Niederdruckseite 27 aufweist. Die Hochdruckseite 25 ist an einer Verbindungsstelle 29 mit der Ventilsteuereinrichtung 17 verbunden, und die Niederdruckseite 27 ist an einer Verbindungsstelle 31 mit der Ventilsteuereinrichtung 17 verbunden. Als Speichereinrichtung weist der Speicherkreislauf 23 einen hydropneumatischen Doppelkolbenspeicher 33 auf. Dessen Doppelkolben 35, der im Speichergehäuse 37 längsverfahrbar geführt ist, trennt im Speichergehäuse 37 einen ersten Arbeitsraum 39 mit einem unter einem Vorspanndruck stehenden Arbeitsgas, insbesondere N₂, von einem zweiten Arbeitsraum 41, der an der Niederdruckseite 27 des Speicherkreislaufs 23 angeschlossen ist, von einem dritten Arbeitsraum 43, der mit der Niederdruckseite 27 des Speicherkreislaufs 23 verbunden ist, und von einem vierten Arbeitsraum 45, der Atmosphärendruck führt. Ein an der Niederdruckseite 27 zusätzlich angeschlossener, pneumatisch vorgespannter Hydrospeicher 47 dient zur Volumenkompensation bei Auftreten unstetiger Ereignisse oder aufgrund von Temperatureinflüssen. Des Weiteren ist an einer Einspeisestelle 49 eine nicht dargestellte Permanentfluidvolumenversorgung angeschlossen, die über eine Einspeiseleitung 51 und über ein Rückschlagventil 53 mit der Verbindungsstelle 31 und dadurch mit der Niederdruckseite 27 des Speicherkreislaufs 23 in Verbindung ist. Von der Verbindungsstelle 31 setzt sich die Einspeiseleitung 51 über ein Druckbegrenzungsventil 55 zum Tank T hin fort. Diese Konstantdruckversorgung stellt sicher, dass die Niederdruckseite 27 auf dem systemeigenen Vorspanndruckniveau gehalten wird und dass das Gesamtsystem über die Einspeiseleitung 51 befüllt wird, wenn Volumenverluste auszugleichen sind, beispielsweise wenn bei Druckspitzen Fluid über das Druckbegrenzungsventil 21 und/oder 55 zum Tank T abfließt.

Die Ventilsteuereinrichtung 17 weist in den Arbeitsleitungen 13, 15 ein Paar erster Ventileinrichtungen auf, die jeweils durch ein 2/2-Wegeventil 57 bzw. 58, jeweils mit Rückschlagfunktion, gebildet sind, die in ihrer geöffneten Stellung die beiden Motor-Pumpeneinheiten 5 und 7 miteinander verbinden und in ihrer Sperrstellung die jeweilige Hochdruckseite des Gesamtsystems von der Niederdruckseite entkoppeln, wobei, entsprechend der Orientierung der Rückschlagfunktion, die Verdrängereinheit 1 der Hochdruckseite und die Verdrängereinheit 3 der Niederdruckseite des Gesamtsystems zugeordnet sind. Zwischen die Arbeitsleitungen 13 und 15 und die Niederdruckseite 27 des Speicherkreislaufs 23 ist ein Paar zweiter Ventileinrichtungen geschaltet, die jeweils ebenfalls durch ein 2/2-Wegeventil 59 bzw. 60, jeweils mit Rückschlagfunktion, gebildet sind. Des Weiteren ist zwischen den Arbeitsleitungen 13 und 15 und die Verbindungsstelle 29 mit der Hochdruckseite 25 des Speicherkreislaufs 23 ein Paar dritter Ventileinrichtungen mit Proportional- und Sperrfunktion geschaltet, gebildet aus je einem 2/2-Wegeventil 61 bzw. 62.

In dem Leitungsabschnitt der Arbeitsleitungen 13, 15 zwischen den Wegeventilen 57 bzw. 58 und den Wegeventilen 61 bzw. 62 ist, zu letzteren parallel, ein Paar weiterer, vierter Ventileinrichtungen geschaltet, gebildet durch Druckbegrenzungsventile 63 bzw. 64, jeweils mit Proportional-Druckbegrenzungsfunktion. Zwischen die Verbindungsstelle 29 der Hochdruckseite 25 des Speicherkreislaufs 23 und die Verbindungsleitung 67 zwischen den Druckbegrenzungsventilen 63 und 64 ist ein weiteres Rückschlagventil 69 geschaltet. Vervollständigt wird das Gesamtsystem durch ein Druckbegrenzungsventil 71, das sich in der Verbindungsleitung 73 befindet, die zwischen den Verbindungsstellen 29 und 31, also den Anschlussstellen des Speicherkreislaufs 23, verläuft.

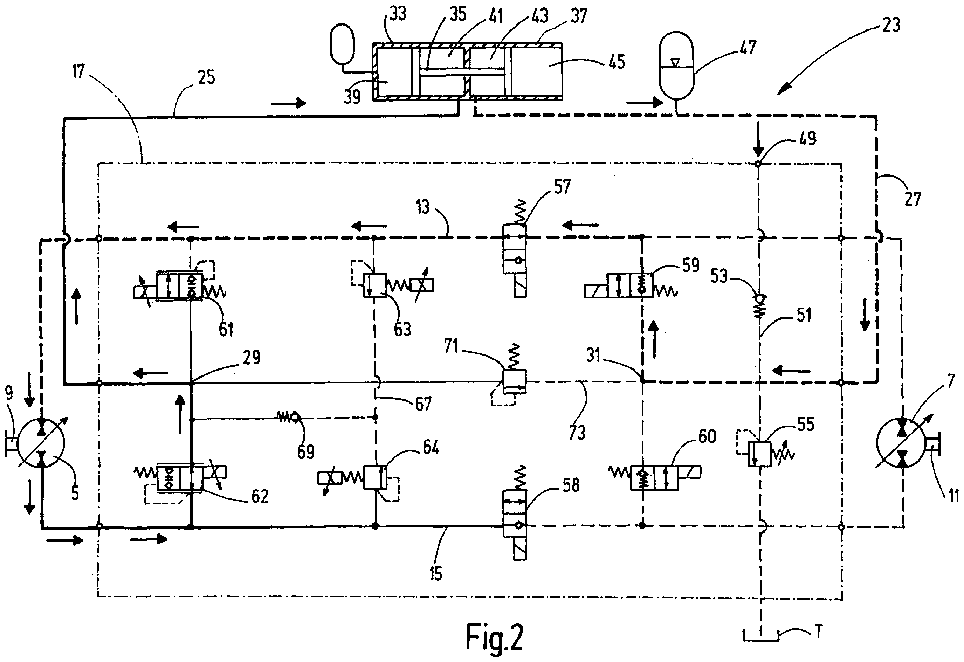

In den folgenden Fig. 2 bis 6 sind die Fluidwege für mehrere zu beschreibende Betriebszustände verdeutlicht, wobei die mit der Hochdruckseite 25 des Speicherkreislaufs 23 jeweils in Verbindung stehenden Fluidwege mit ausgezogenen Linien und die der Niederdruckseite 27 zugehörigen Fluidwege mit gestrichelten Linien angegeben sind und der Strömungsverlauf mit Strömungspfeilen kenntlich gemacht ist.

Die Fig. 2 zeigt den Betriebszustand des Ladens des Doppelkolbenspeichers 33 bei stillgesetztem Fahrantrieb. Voraussetzung für das Laden ist eine laufende Verbrennungskraftmaschine und freies Speichervolumen. Bei sich im Stillstand befindendem Fahrantrieb befinden sich die Motor-Pumpeneinheiten 5 und 7 zunächst in Neutralstellung ohne Schluckvolumen, so dass kein Druckfluid über diese Einheiten strömt. Um Volumenstrom für den Ladevorgang bereitzustellen, wird die Motor-Pumpeneinheit 5 ausgeschwenkt und das Proportional-Wegeventil 62 mit maximaler Auslenkung geschaltet sowie das Ventil 58. Für den Fördervorgang fordert die ausgeschwenkte Motor-Pumpeneinheit 5 aus der ersten Arbeitsleitung 13 Volumen an, das aus dem niederdruckseitigen dritten Arbeitsraum 43 des Doppelkolbenspeichers 33 heraus über die Verbindungsstelle 31 zuströmt und über das ungeschaltete Wegeventil 59 bei geöffneter Rückschlagfunktion sowie das geöffnete Wegeventil 57 zur Motor-Pumpeneinheit 5 gelangt. Das geförderte Volumen gelangt über das maximal angesteuerte Wegeventil 62 zum hochdruckseitigen Arbeitsraum 41 des Doppelkolbenspeichers 33. Dabei ist das Druckbegrenzungsventil 64 zumindest auf den Ladedruck in der zweiten Arbeitsleitung 15 eingestellt, um einen Volumenstrom über es zu vermeiden. Bei Überschreiten des maximalen Speicherdrucks schaltet das Druckbegrenzungsventil 71 und führt den Ladevolumenstrom nach der Niederdruckseite 27 ab. Von dort gelangt er über die Rückschlagfunktion des ungeschalteten Wegeventils 59 zur ersten Arbeitsleitung 13 und gleicht damit die Volumenbilanz aus.

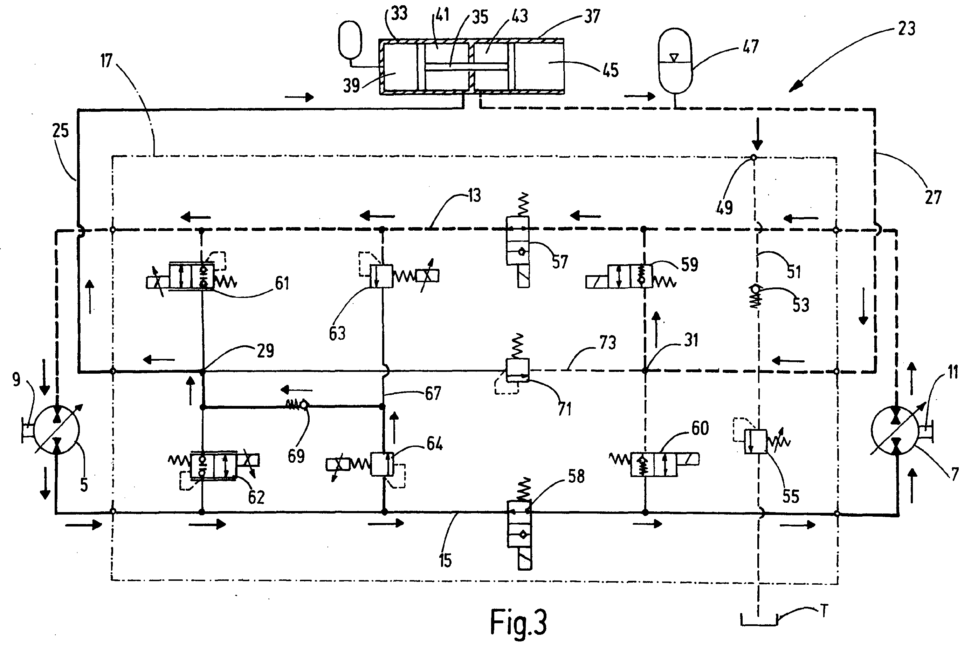

Die Fig. 3 verdeutlicht den Betriebszustand des Ladens des Doppelkolbenspeichers 33 im Fahrbetrieb. Voraussetzung für das Laden ist wiederum eine laufende Verbrennungskraftmaschine und freies Speichervolumen. Im Fahrbetrieb sind bei beiden Verdrängereinheiten 1 und 3 und die Motor-Pumpeneinheiten 5 und 7 ausgeschwenkt, und es zirkuliert Druckmedium zwischen den Verdrängereinheiten 1 und 3. Um den nötigen Volumenstrom für den Ladevorgang zu erzeugen, wird die Motor-Pumpeneinheit 5 der Verdrängereinheit 1 weiter ausgeschwenkt, damit in die zweite Arbeitsleitung 15 mehr Volumen eingespeist wird, als von der zweiten Verdrängereinheit 3 aufgenommen werden kann. Somit steigt der Druck in Arbeitsleitung 15. Bei Erreichen des am Druckbegrenzungsventil 64 eingestellten Schaltdrucks gelangt Volumen über das nachgeordnete Rückschlagventil 69 zum hochdruckseitigen Arbeitsraum 41 des Doppelkolbenspeichers 33 und lädt diesen auf. Das im Doppelkolbenspeicher 33 auf der Niederdruckseite im Arbeitsraum 43 verdrängte Volumen fließt über die Rückschlagfunktion des ungeschalteten Wegeventils 59 zur ersten Arbeitsleitung 13, wo es sich mit dem im Fahrbetrieb zirkulierenden Volumen vereint. Bei Überschreitung des maximalen Speicherdrucks schaltet das Druckbegrenzungsventil 71 und führt einen Ladevolumenstrom zur Niederdruckseite 27 ab, von wo er über die Rückschlagfunktion des Wegeventils 59 zur ersten Arbeitsleitung 13 abgeführt wird und dadurch die Volumenbilanz ausgleicht.

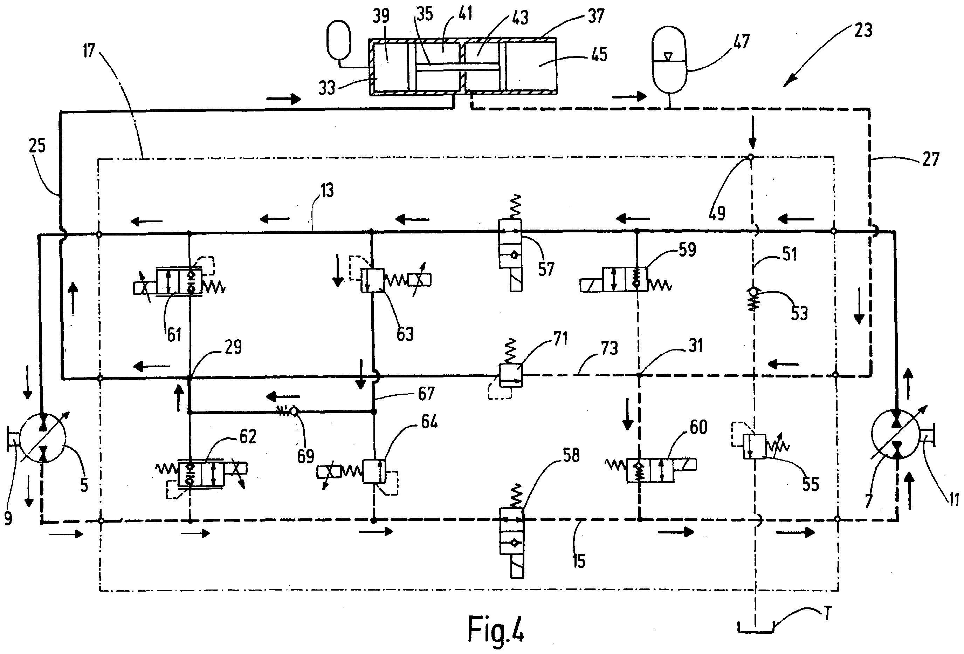

Die Fig. 4 verdeutlicht den Betriebszustand "Bremsenergie-Rückgewinnung/Überdrehzahlschutz". Voraussetzung für die Rückgewinnung und Speicherung von Bremsenergie ist verfügbares Speichervolumen im Doppelkolbenspeicher 33 und ein sich in Bewegung befindliches Fahrzeug (kinetische Energie). Ursache dafür, weshalb die Verbrennungskraftmaschine vor Überlast/Überdrehzahl geschützt werden muss, ist meist eine am Fahrzeug angreifende Kraft, beispielsweise potentielle Energie bei Gefälle. Bei sich in Bewegung befindlichem Fahrantrieb mit Zirkulation des Druckmediums, in der Darstellung von Fig. 4 entgegen dem Uhrzeigersinn, soll erreicht werden, dass Fahrgeschwindigkeit und Motordrehzahl verzögert oder beibehalten werden. Im Fahrbetrieb sind beide Verdrängereinheiten 1 und 3 in Tätigkeit, wobei die Motor-Pumpeneinheiten 5 und 7 voll oder teilweise ausgeschwenkt sind.

Zur Bremsenergie-Rückgewinnung oder zum Schutz vor Überlast/Überdrehzahl der Verbrennungskraftmaschine wird die Motor-Pumpeneinheit 5 der Verdrängereinheit 1 zurückgeschwenkt, um das an der Welle 9 wirksame Drehmoment so weit zu verringern, bis die auf die Verbrennungskraftmaschine einwirkende Last kein Überdrehen mehr verursachen kann. Analog hierzu steigt der Druck in der ersten Arbeitsleitung 13, da die zweite Verdrängereinheit 3 mehr fördert als die Verdrängereinheit 1 nun noch aufnehmen kann. Dieser ansteigende Druck erzeugt wiederum ein Bremsmoment in der Verdrängereinheit 3, welches das Fahrzeug verzögert. Somit kann man dabei auch von Bremsenergie sprechen. In diesem Fall schaltet das Druckbegrenzungsventil 63 bei eingestelltem Schaltdruck durch und begrenzt somit den Druck in der Arbeitsleitung 13. Das über das Druckbegrenzungsventil 63 abfließende Volumen fließt über das Rückschlagventil 69 zur Hochdruckseite 25 des Doppelkolbenspeichers 33 und lädt diesen auf. Das im Doppelkolbenspeicher 33 verdrängte Volumen fließt von der Niederdruckseite 27 über das Wegeventil 60 zur Arbeitsleitung 15 ab. Bei Überschreiten des maximalen Speicherdrucks schaltet das Druckbegrenzungsventil 71 und führt Ladevolumenstrom nach der Niederdruckseite 27 ab. Von dort wird zum Ausgleich der Volumenbilanz Volumen über die Rückschlagfunktion des ungeschalteten Wegeventils 60 zur Arbeitsleitung 15 abgeführt. Zudem fließt auch das aus dem Doppelkolbenspeicher 33 verdrängte Volumen der Niederdruckseite 27 über das Wegeventil 60 zur Arbeitsleitung 15. Das gesamte, in der Arbeitsleitung 15 zusammenfließende Volumen fließt nun zur Saugseite der Motor-Pumpeneinheit 7 der Verdrängereinheit 3, wodurch die Volumenbilanz des Systems konstant bleibt.

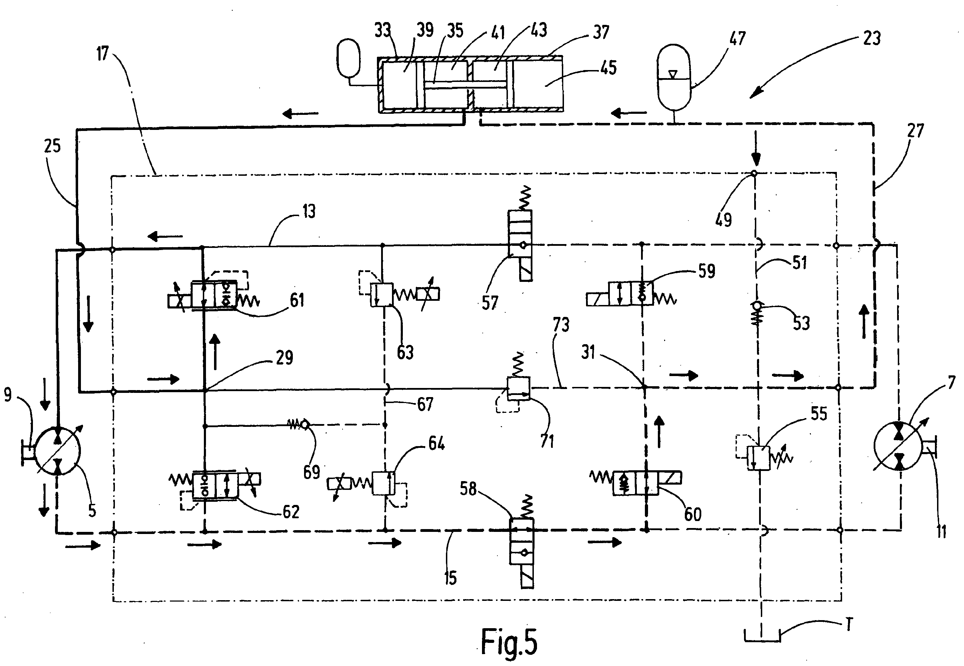

Die Fig. 5 verdeutlicht den Betriebszustand "Anlassen der Verbrennungskraftmaschine". Voraussetzung für das hydraulische Anlassen/Starten der Verbrennungskraftmaschine ist gespeicherte hydraulische Energie im Doppelkolbenspeicher 33. Hierbei sind die Verbrennungskraftmaschine sowie der gesamte Fahrantrieb stillgesetzt, und die Motor-Pumpeneinheiten 5 und 7 der Verdrängereinheiten 1, 3 sind zunächst in Neutralstellung. Bei Einleitung der Anlasssequenz wird die Motor-Pumpeneinheit 5 der Verdrängereinheit 1 voll ausgeschwenkt. Anschließend werden die Wegeventile 61 und 60 geschaltet, wobei auch das Wegeventil 57 geschaltet werden kann, um Druckspitzen an der zweiten Verdrängereinheit 3 zu vermeiden. Nun fließt das Druckmedium aus dem hochdruckseitigen Arbeitsraum 41 des Doppelkolbenspeichers 33 über das Wegeventil 61 zur Arbeitsleitung 13 und weiter zur ersten Verdrängereinheit 1. Das Druckbegrenzungsventil 63 sollte mindestens auf den Speicherdruck in der Arbeitsleitung 13 eingestellt sein, um einen über es fließenden Volumenstrom zu vermeiden. In der Verdrängereinheit 1 wird die hydraulische Energie in mechanische umgewandelt und erzeugt an der Welle 9 ein Anlassdrehmoment. Der über die Verdrängereinheit 1 fließende Volumenstrom strömt zur Arbeitsleitung 15 hin und über das Wegeventil 58 und das Wegeventil 60 letztendlich zur Niederdruckseite 27 des Doppelkolbenspeichers 33, wo er das zuvor auf der Hochdruckseite 25 verdrängte Volumen ersetzt.

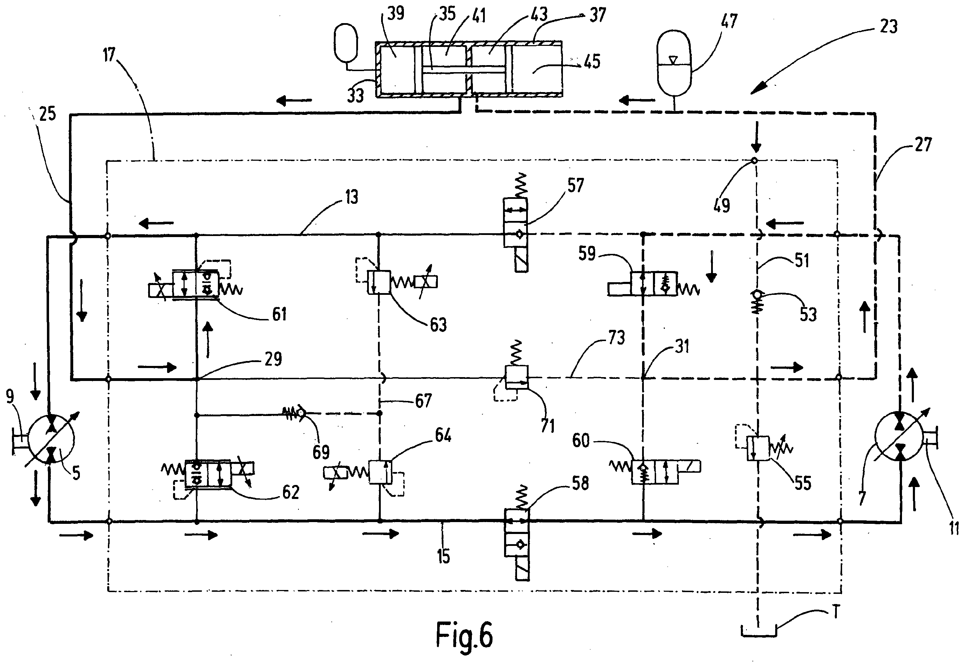

Die Fig. 6 verdeutlicht den Betriebszustand "Boosten". Voraussetzung für das hydraulische Boosten des Antriebs ist gespeicherte hydraulische Energie im Hydrospeicher. Hierbei befindet sich der Fahrantrieb in Bewegung mit Zirkulation des Druckmediums zwischen den Verdrängereinheiten 1 und 3 entgegen dem Uhrzeigersinn. Eine auf den Antrieb plötzlich einwirkende Lastspitze, beispielsweise aufgrund eines steilen Hangs, veranlasst ein Boosten des Antriebs, während die Motor-Pumpeneinheiten 5 und 7 beider Verdrängereinheiten 1 und 3 voll oder teilweise ausgeschwenkt sind. Zum Boosten werden nun zunächst das Wegeventil 57 und anschließend die Wegeventile 61 und 59 geschaltet. Durch das voreilende Schalten des Wegeventils 57 wird sichergestellt, dass das Druckmedium auch bei dem sich einstellenden Druckgefälle über das Wegeventil 57 nur in der vorgesehenen Richtung fließen kann. Das Druckbegrenzungsventil 63 sollte mindestens auf den Arbeitsdruck in der Arbeitsleitung 13 eingestellt sein, um einen Volumenstrom über es zu vermeiden. Durch Schalten der Wegeventile 61 und 59 fließt das Druckmedium nun von der Hochdruckseite 25 des Doppelkolbenspeichers 33 über das Wegeventil 61 zur Arbeitsleitung 13 und gleich weiter zur Verdrängereinheit 1. Dadurch wird das Druckniveau der Saugseite der Motor-Pumpeneinheit 5 der Verdrängereinheit 1 angehoben. Somit ist zur Bereitstellung des erforderlichen Drucks auf der Druckseite der Verdrängereinheit 1 (in der Arbeitsleitung 15) nun eine geringere von der Verbrennungskraftmaschine zu liefernde mechanische Leistung erforderlich, so dass die Verbrennungskraftmaschine entlastet wird. Das Druckmedium fließt von der Verdrängereinheit 1 über die Arbeitsleitung 15 durch das Wegeventil 58 zur zweiten Verdrängereinheit 3 hin, wo die hydraulische Energie in mechanische umgewandelt und auf die Fahrmechanik weitergeleitet wird. Hierbei ist es notwendig, dass das Druckbegrenzungsventil 64 auf den maximalen Druck in der Arbeitsleitung 15 eingestellt ist, um einen Volumenstrom darüber zu vermeiden. Von der ersten Verdrängereinheit 1 aus fließt das Druckmedium über die Arbeitsleitung 15 über die Verdrängereinheit 7 durch das Wegeventil 59 weiter zur Niederdruckseite 27 des Doppelkolbenspeichers 33, wo es das zuvor auf der Hochdruckseite 25 verdrängte Volumen ersetzt.

Die Erfindung bietet die Möglichkeit, den gewünschten Arbeitsdruck in der Arbeitsleitung 13 proportional einzustellen. Hierzu wird das proportional arbeitende Wegeventil 61 auf einen gewünschten Druck eingestellt und gibt einen entsprechenden Öffnungsquerschnitt frei. Bei allen beschriebenen Vorgängen bleibt die Volumenbilanz des Systems unverändert. Es wird lediglich Volumen von einer Seite des Doppelkolbenspeichers 33 über den Speicherkreislauf 23 und die Verdrängereinheiten 1, 3 zur anderen Seite verschoben und dabei Energie abgegeben oder absorbiert und gespeichert. Derart ist ein geschlossenes Fahrantriebssystem realisiert. Das Rückschlagventil 53, als Schließventil, wird vornehmlich während des Befüllungsvorgangs des Systems durchflossen und kappt die konstante Volumenzufuhr von der Einspeisestelle 49 her, sobald die Niederdruckseite 27 des Doppelkolbenspeichers 33, wie auch die beiden Arbeitsleitungen 13 und 15, auf dem eingestellten System-Mindestdruck sind. Bei einer späteren "Umschichtung" des Volumens des Doppelkolbenspeichers 33 wird jedoch kein zusätzliches Volumen mehr benötigt. Somit bleibt das Druckbegrenzungsventil 55 geschlossen. Dieses dient lediglich der Druckabsicherung der Niederdruckseite 27 und kann für die weitere Funktionsbetrachtung vernachlässigt werden. Gleiches gilt für das Druckbegrenzungsventil 71, welches den Maximaldruck der Hochdruckseite 25 des Doppelkolbenspeichers 33 begrenzt.

Lastspitzen können außer vom Fahrantrieb her auf die Verbrennungskraftmaschine auch durch Funktionen einer Arbeitshydraulik entstehen, deren Hydropumpe in der Regel von der Antriebswelle 9 der Verdrängereinheit 1 angetrieben ist. Durch den beschriebenen Boost-Vorgang können auch diese auf die Verbrennungskraftmaschine wirkenden Lastspitzen aufgefangen werden. Das Paar der Wegeventile 61 und 62 wird vorzugsweise im zugeordneten Ventilblock als zwei in der Funktion getrennte Einheiten ausgeführt. Dabei kann für jede Einheit ein 2/2-Wegeventil, doppelsitzdicht, zur Zuschaltung der Hochdruckseite 25 auf die Arbeitsleitung 13 und auf die Verdrängereinheit 1 beim Starten der Verbrennungskraftmaschine vorgesehen sein, und es kann ein Proportional-Druckregelventil vorgesehen sein, um den Druck der Arbeitsleitungen 13, 15 einstellen zu können. Ferner kann statt des Proportionalventils 62 ein Schließventil zum Laden des Speichers im Stillstand eingesetzt werden.

Eine Kombination beider Funktionen erweist sich als eher problematisch, da beim Starten der Verbrennungskraftmaschine ein möglichst großer Querschnitt geöffnet werden muss (für geringen Druckverlust) und wobei bei der Druckregelfunktion ein wesentlich geringerer Querschnitt mit hoher Auflösung (Feinsteuerkante) erforderlich ist. Bei unterschiedlichen, möglichen Auslegungen der Verdrängereinheiten 1 und 3 (wie konstant, variabel oder als Mooring-Pumpen) oder auch bei unterschiedlichen Funktionen des Fahrantriebs (z.B. Boosten bei Vor- wie auch Rückwärtsfahrt ohne Mooring-Pumpen, oder Boosten nur bei Vorwärtsfahrt) können die Funktionseinheiten der Wegeventile 61 und 62 jedoch auch nur mit einer der beiden genannten, jeweils dafür erforderlichen Funktionen ausgeführt werden. Bei entsprechend großen Volumenströmen sollten auch sämtliche Funktionseinheiten der Ventilsteuereinrichtung 17 als vorgesteuerte Ventillösungen ausgeführt werden.

Es bleibt noch zu erwähnen, dass das Gesamtsystem spiegelsymmetrisch aufgebaut ist und alle beschriebenen Funktionen auch entsprechend umgekehrt ablaufen können. Sofern die Niederdruck- und die Hochdruck-Seite definiert sind, ist die dahingehende Definition vom jeweiligen Betriebszustand abhängig und kann entsprechend variieren. Die vorstehend beschriebenen Ventileinrichtungen 57 und 58 können von ihrer Funktion her eigentlich auch als Rückschlagventil gesehen werden. Mit der erfindungsgemäßen Antriebslösung ist ein weitgehend konstantes Druckniveau der Niederdruck-Seite erreicht, bedingt durch den Einfluss des Doppelkolbenspeichers und das zusätzliche Kompensationsvolumen (Kapazität) des Membranspeichers auf der Niederdruck-Seite. Dieses konstante Druckniveau dient auch als Referenzdruck einiger Vorsteuerungen im Ventilblock. Ein weiterer wesentlicher Punkt der Erfindung ist die proportional einstellbare und systemgrößen-unabhängige Druckregelung der saugseitigen Arbeitsleitung im Boostbetrieb. Ferner ist eine proportional einstellbare und systemgrößen-unabhängige Druckbegrenzung der Arbeitsleitung im Schiebebetrieb (kinetische und/oder potentielle Energie) erreicht.

## Patentansprüche

1. Hydrostatischer Antrieb als Gesamtsystem mit zwei fluidischen, zumindest vom Volumenstrom her einstellbaren Verdrängereinheiten (1, 3), von denen eine mit einem Antrieb (9) und die andere mit einem Abtrieb (11) gekoppelt ist und die in der Art eines geschlossenen fluidischen Kreislaufs miteinander verbindbar sind, an dem ein Speicherkreislauf (23) angeschlossen ist, der mindestens eine Speichereinrichtung (33) aufweist und der sich in eine Niederdruck-(27) und eine Hochdruckseite (25) unterteilt, und mit einer Ventilsteuereinrichtung (17) zum Ansteuern des Gesamtsystems, wobei unter Bildung des geschlossenen fluidischen Kreislaufs die beiden Verdrängereinheiten (1, 3) sowohl auf ihrer jeweiligen Eingangs- als auch Ausgangsseite mit je einer Arbeitsleitung (13, 15) miteinander verbunden sind und wobei die Ventilsteuereinrichtung (17) im Wesentlichen zwischen die beiden Arbeitsleitungen (13, 15) geschaltet ist, **dadurch gekennzeichnet, dass** zwischen die beiden Arbeitsleitungen (13, 15) und den niederdruckseitigen Speicherkreislauf (27) je eine Ventileinrichtung (59, 60) mit Rückschlagfunktion geschaltet ist.

2. Hydrostatischer Antrieb nach Anspruch 1, **dadurch gekennzeichnet, dass** die Ventilsteuereinrichtung (17) zwei erste Ventileinrichtungen (57, 58) aufweist, die in ihrer geöffneten Stellung die beiden Verdrängereinheiten (1, 3) über die jeweilige Arbeitsleitung (13, 15) miteinander verbinden und die in ihrer Sperrstellung zumindest die Hochdruckseite (25) von der Niederdruckseite (27) des Gesamtsystems entkoppeln.

3. Hydrostatischer Antrieb nach Anspruch 1 oder 2, **dadurch gekennzeichnet, dass** die abtriebsseitige Verdrängereinheit (3) der Niederdruckseite (27) und die antriebsseitige Verdrängereinheit (1) der Hochdruckseite (25) des Gesamtsystems zugeordnet sind.

4. Hydrostatischer Antrieb nach einem der vorstehenden Ansprüche, **dadurch gekennzeichnet, dass** zwischen die beiden Arbeitsleitungen(13, 15) und den hochdruckseitigen Speicherkreislauf (25) je eine weitere dritte Ventileinrichtung (61, 62) mit Proportionalfunktion geschaltet ist.

5. Hydrostatischer Antrieb nach einem der vorstehenden Ansprüche, **dadurch gekennzeichnet, dass** an den Niederdruck-Speicherkreislauf (27) zwischen den zweiten Ventileinrichtungen (59, 60) und der abtriebsseitigen Verdrängereinheit (3) eine Permanentfluidvolumenversorgung (49) angeschlossen ist.

6. Hydrostatischer Antrieb nach Anspruch 5, **dadurch gekennzeichnet, dass** die Permanentfluidvolumenversorgung (49) an eine Einspeiseleitung (51) an deren Eingang angeschlossen ist, die ausgangsseitig in einen Tank (T) ausmündet, dass die Einspeiseleitung (51) an den Niederdruck-Speicherkreislauf (27) permanent über eine Verbindungsstelle (31) angeschlossen ist und dass zwischen die Verbindungsstelle (31) und den Eingang in die Einspeiseleitung (51) ein Rückschlagventil (53) und zwischen der Verbindungsstelle (31) und dem Ausgang in diese Einspeiseleitung (51) ein Druckbegrenzungsventil (55) geschaltet sind.

7. Hydrostatischer Antrieb nach einem der Ansprüche 4 bis 6, **dadurch gekennzeichnet, dass** zwischen die beiden Arbeitsleitungen (13, 15), im Leitungsabschnitt zwischen den beiden ersten Ventileinrichtungen (57, 58) sowie den beiden dritten Ventileinrichtungen (61, 62) und parallel zu den letzteren verlaufend, zwei weitere vierte Ventileinrichtungen (63, 64) mit Proportional-Druckbegrenzungsfunktion geschaltet sind.

8. Hydrostatischer Antrieb nach Anspruch 7, **dadurch gekennzeichnet, dass** zwischen den Paaren von dritten (61, 62) und vierten Ventileinrichtungen (63, 64) mit ihren zuordenbaren Verbindungsleitungen eine weitere Verbindungsleitung verläuft, in die ein weiteres Rückschlagventil (69) geschaltet ist.

9. Hydrostatischer Antrieb nach einem der vorstehenden Ansprüche, **dadurch gekennzeichnet, dass** die Speichereinrichtung (33) des Speicherkreislaufs (23) im Wesentlichen aus einem Doppelkolbenspeicher (33) besteht, dessen in einem Speichergehäuse (37) längsverfahrbar geführter Doppelkolben (35) einen ersten Arbeitsraum (39) mit einem Vorspanndruck von einem zweiten Arbeitsraum (41) auf der Hochdruckseite (25) sowie von einem dritten Arbeitsraum (43) auf der Niederdruckseite (27) und von einem vierten Arbeitsraum (45) mit dem Atmosphärendruck voneinander separiert.

10. Hydrostatischer Antrieb nach einem der vorstehenden Ansprüche, **dadurch gekennzeichnet, dass** die jeweilige Verdrängereinheit (1, 3) aus einem 4-Quadranten-System (5, 7) mit einstellbarem Schwenkwinkel besteht, das sowohl als Hydromotor als auch als Hydropumpe betreibbar ist.

## Claims

1. A hydrostatic drive as an overall system, with two fluidic displacement units (1, 3), which can be adjusted at least in respect of the volumetric flow, one of which displacement units is coupled to a power unit (9) and the other is coupled to an output drive (11) and which can be connected to each other in the manner of a closed fluidic circuit, connected to which is an accumulator circuit (23) which comprises at least one accumulator device (33) and which is subdivided into a low-pressure side (27) and a high-pressure side (25), and with a valve control device (17) for controlling the overall system, wherein, upon formation of the closed fluidic circuit, the two displacement units (1, 3) are connected to each other on their respective input and output side, each with a control line (13, 15), and wherein the valve control device (17) is placed in the circuit substantially between the two control lines (13,15), **characterised in that** a second valve device each (59, 60) with non-return function is placed in the circuit between each of the two control lines (13, 15) and the low-pressure side accumulator circuit (27).

2. The hydrostatic drive according to claim 1, **characterised in that** the valve control device (17) has two first valve devices (57, 58) which, in their open position, connect the two displacement units (1, 3) to one another via the respective control line (13, 15), and which in their shut-off position disconnect at least the high-pressure side (25) from the low-pressure side (27) of the overall system.

3. The hydrostatic drive according to claim 1 or 2, **characterised in that** the displacement unit (3) of the output drive side is assigned to the low-pressure side (27) and the displacement unit (1) of the power unit side is assigned to the high-pressure side (25) of the overall system.

4. The hydrostatic drive according to one of the preceding claims, **characterised in that** a further third valve device (61, 62) with proportional function is placed in the circuit between each of the two control lines (13, 15) and the high-pressure side accumulator circuit (25).

5. The hydrostatic drive according to one of the preceding claims, **characterised in that** a permanent fluid supply (49) is connected to the low-pressure accumulator circuit (27) between the second valve devices (59, 60) and the output drive side displacement unit (3).

6. The hydrostatic drive according to claim 5, **characterised in that** the permanent fluid volume supply (49) is connected to a feed line (51) at its inlet which vents into a tank (T) at the outlet side, that the feed line (51) is permanently connected to the low-pressure accumulator circuit (27) via a connection point (31), and that a non-return valve (53) is placed into the feed line (51) between the connection point (31) and the inlet, and a pressure relief valve (55) is placed in said feed line (51) between the connection point (31) and the outlet.

7. The hydrostatic drive according to one of claims 4 to 6, **characterised in that** two further, fourth valve devices (63, 64) with proportional pressure relief function are placed in the circuit between the two control lines (13, 15) in the line section between the two first valve devices (57, 58) as well as the two third valve devices (61, 62) extending parallel to the latter.

8. The hydrostatic drive according to claim 7, **characterised in that** a further connecting line travels between the pairs of third (61, 62) and fourth valve devices (63, 64) with their associable connecting lines, into which connecting line a further non-return valve (69) is placed.

9. The hydrostatic drive according to one of the preceding claims, **characterised in that** the accumulator device (33) of the accumulator circuit (23) consists substantially of a double-piston accumulator (33), the double-piston (35) of which is guided longitudinally moveable in an accumulator housing (37) and separates a first working chamber (39), applied with a charging pressure, from a second working chamber (41) on the high-pressure side (25) as well as from a third working chamber (43) on the low-pressure side (27) and from a fourth working chamber (45) at atmospheric pressure from each other.

10. The hydrostatic drive according to one of the preceding claims, **characterised in that** the respective displacement unit (1, 3) consists of a four-quadrant system (5, 7) with adjustable pivoting angle, which can be operated as a hydraulic motor as well as a hydraulic pump.

## Revendications

1. Entraînement hydrostatique en tant que système d'ensemble, ayant deux unités (1, 3) volumiques, fluidiques, réglables au moins par le courant en volume, dont l'une est adjointe à une entrée (9) et l'autre à une sortie (11), et qui communiquent entre elles à la manière d'un circuit fluidique fermé, auquel est raccordé un circuit (23) d'accumulateur, qui a au moins un dispositif (33) accumulateur et qui se subdivise en un côté (27) basse pression et en un côté (25) haute pression, et comprenant un dispositif (17) de commande de soupape, pour commander le système d'ensemble, dans lequel, en formant le circuit fluidique fermé, les deux unités (1, 3) volumiques communiquent entre elles, à la fois sur leurs côtés respectifs d'entrée et de sortie, avec respectivement une ligne (13, 15) de travail et dans lequel le dispositif (17) de commande de soupape est monté sensiblement entre les deux lignes (13, 15) de travail, **caractérisé en ce que**, respectivement, un dispositif (59, 60) de soupape à fonction de clapet antiretour est monté entre les deux lignes (13, 15) de travail et le circuit (27) d'accumulateur du côté basse pression.

2. Entraînement hydrostatique suivant la revendication 1, **caractérisé en ce que** le dispositif (17) de commande de soupape a deux premiers dispositifs (57, 58) de soupape, qui, en leur position ouverte, mettent les deux unités (1, 3) volumiques en communication entre elles par la ligne (13, 15) de travail respectif et qui, en leur position d'obturation, découplent au moins le côté (25) haute pression du côté (27) basse pression du système d'ensemble.

3. Entraînement hydrostatique suivant la revendication 1 ou 2, **caractérisé en ce que** l'unité (3) volumique du côté sortie est associée au côté (27) basse pression et l'unité (1) volumique du côté entrée est associée au côté (25) haute pression du système d'ensemble.

4. Entraînement hydrostatique suivant l'une des revendications précédentes, **caractérisé en ce qu'**un autre troisième dispositif (61, 62) de soupape à fonction proportionnelle est monté entre les deux lignes (13, 15) de travail et le circuit (25) d'accumulateur du côté haute pression.

5. Entraînement hydrostatique suivant l'une des revendications précédentes, **caractérisé en ce qu'**une alimentation (49) en volume de fluide permanente est raccordée au circuit (27) d'accumulateur basse pression, entre les deuxièmes dispositifs (59, 60) de soupape et l'unité (3) volumique du côté sortie.

6. Entraînement hydrostatique suivant la revendication 5, **caractérisé en ce que** l'alimentation (49) en volume de fluide permanente est raccordée à son entrée à une ligne (51) d'alimentation, qui débouche du côté de la sortie dans un réservoir (T), **en ce que** la ligne (51) d'alimentation est raccordée de manière permanente par un point (31) de liaison au circuit (27) d'accumulateur basse pression et **en ce qu'**entre le point (31) de liaison et l'entrée, un clapet (53) antiretour est monté dans la ligne (51) d'alimentation et, entre le point (31) de liaison et la sortie, une soupape (55) de limitation de la pression est montée dans cette ligne (51) d'alimentation.

7. Entraînement hydrostatique suivant l'une des revendications 4 à 6, **caractérisé en ce qu'**entre les deux lignes (13, 15) de travail, sont montés, dans le tronçon de ligne entre les deux premiers dispositifs (57, 58) de soupape, ainsi qu'entre les deux troisièmes dispositifs (61, 62) de soupape, et en s'étendant parallèlement à ces derniers, deux autres quatrièmes dispositifs (63, 64) de soupape à fonction de limitation de la pression proportionnelle.

8. Entraînement hydrostatique suivant la revendication 7, **caractérisé en ce qu'**entre les paires de troisièmes (61, 62) et quatrièmes dispositifs (63, 64) de soupape, avec des lignes de liaison pouvant leur être associées, s'étend une autre ligne de liaison, dans laquelle est montée un autre clapet (69) antiretour.

9. Entraînement hydrostatique suivant l'une des revendications précédentes, **caractérisé en ce que** le dispositif (33) d'accumulateur du circuit (23) d'accumulateur est constitué essentiellement d'un accumulateur (33) à double piston, dont le piston (35) double, guidé de manière à pouvoir se déplacer longitudinalement dans une enveloppe (37) de l'accumulateur, sépare un premier espace (39) de travail, ayant une pression pilote, d'un deuxième espace (41) de travail du côté (25) haute pression, ainsi que d'un troisième espace (43) de travail du côté (27) de basse pression et d'un quatrième espace (45) de travail ayant la pression atmosphérique.

10. Entraînement hydrostatique suivant l'une des revendications précédentes, **caractérisé en ce que** les unités (1, 3) volumiques respectives sont constituées d'un système (5, 7) à 4 cadrans à angle de pivotement réglable, qui peut fonctionner, tant comme moteur hydraulique, que comme pompe hydraulique.
